# EUROPÄISCHE PATENTANMELDUNG

(11) **EP 1 586 886 A2**
(43) Veröffentlichungstag der Anmeldung: **19.10.2005**
(21) Anmeldenummer: 05101125.2
(22) Anmeldetag: 15.02.2005
(51) Int. Cl.: G01N 1/28, H01J 37/02, H01L 23/544

(54) **Prüfkörper für Elektronenmikroskope und Verfahren zur Herstellung eines Prüfkörpers**

(30) Priorität: 17.04.2004 DE 102004018679
(71) Anmelder: ROBERT BOSCH GMBH, 70442 Stuttgart (DE)
(72) Erfinder: Glock, Armin, 73660, Urbach (DE); Hausenbiegl, Guenter, 71384, Weinstadt (DE); Constantinides, Ina, 71696, Möglingen (DE); Pritsch, Carmen, 71701, Schwieberdingen (DE)

(57) **Zusammenfassung**

Es wird ein Prüfkörper (2) für Elektronenmikroskope mit mehreren in unterschiedlicher Form und/oder Größe und in einer dauerbeständigen vorgebbaren Belegung auch einem Trägermaterial 4 angeordneten geometrischen und elektrisch leitfähigen Strukturen (3) beschrieben, wobei das Trägermaterial elektrisch leitend ist. Des Weiteren wird ein Verfahren zur Herstellung eines Prüfkörpers (2) für Elektronenmikroskope vorgeschlagen, der ein elektrisch leitendes Trägermaterial (4) und mehrere darauf in einer vordefinierten Belegung angeordnete geometrische und elektrisch leitende Strukturen (3) aufweist. Die geometrischen Strukturen (3) sind mit unterschiedlicher Lage und/oder Größe auf dem Trägermaterial (4) ausgeführt und mittels Mikrogalvanoformung aufgebracht, wobei eine vordefinierte Belegung des Trägermaterials (4) mittels Photolithographie umgesetzt wird (Figur 2).

## Beschreibung

### Stand der Technik

Die Erfindung betrifft einen Prüfkörper für Elektronenmikroskope gemäß der im Oberbegriff des Patentanspruches 1 näher definierten Art und ein Verfahren zur Herstellung eines Prüfkörpers für Elektronenmikroskope.

Produkte bzw. Bauteile werden nach deren Herstellung und vor ihrem bestimmungsgemäßen Einsatz in der Praxis mit geeigneten Reinigungsverfahren von Schmutzpartikeln befreit bzw. gesäubert. Da die Sauberkeitsanforderungen ständig steigen ist auch die Effizienz der Reinigungsprozesse permanent weiterzuentwickeln. Dies führt jedoch auch dazu, dass die Anforderungen an die jeweils zur Beurteilung der Qualität des Reinigungseffektes eingesetzten Analysemethoden ansteigen.

Üblicherweise werden im Rahmen der Qualitätssicherung zur Sauberkeitsanalyse im Wesentlichen optoelektronische Bildanalysesysteme eingesetzt. Damit werden auf einem Filter befindliche und von einem Produkt mittels eines Reinigungsverfahrens entfernte Partikel in einem Größenbereich zwischen 30 µm bis 1500 µm vermessen und anschließend in Grö-ßenklassen eingeteilt.

Sollen jedoch auch Sauberkeitsanalysen im Bereich von Fertigungen mit besonders hohen Anforderungen an die Produktsauberkeit durchgeführt werden, bei welchen auch Schmutzpartikel in einem Größenbereich unterhalb von 30 µm die Funktion eines Produktes beeinträchtigen, ist eine Analyse im Wesentlichen nur mit Einsatz von Elektronenmikroskopen, mit welchen Partikelgrößen bis zu 2 µm erfassbar sind, durchführbar. Zudem weist eine mittels eines Elektronenmikroskops durchgeführte Analyse im Vergleich zu mittels Lichtmikroskopie durchgeführten Analysen den Vorteil auf, dass jeweils auch die chemische Zusammensetzung der Partikel analysierbar ist und somit eine Herkunft der Schmutzpartikel leichter ermittelbar ist. Damit können mögliche Schmutzquellen einfacher lokalisiert und beseitigt werden.

Die über die jeweilige Analysemethoden vorliegenden Sauberkeitsanalysen sind jedoch aufgrund der jeweils unterschiedlich ausgeführten realen Probenkörper nachteilhafterweise nur schwer miteinander vergleichbar und die Auswerteprotokolle der Analysesysteme sind derzeit nur schwer verifizierbar.

Dies resultiert aus der Tatsache, dass eine genaue Belegung eines Probenkörpers mit den während der Reinigung von den Bauteilen entfernten Schmutzpartikeln verschiedener Partikelgrößenklassen nicht bekannt ist und über eine manuelle Auswertung auch nur schwer ermittelbar ist. Aus diesen Gründen ist eine Abweichung zwischen dem Auswerteprotokoll eines Bildanalysesystems und der realen Belegung des Probenkörpers so gut wie nicht verifizierbar.

Aus der DE 101 26 185 A1 ist ein Probenkörper für optoelektronische Bildanalysesysteme, der einen ebenen Basiskörper aufweist, auf dem wiederum mehrere geometrische Strukturen angeordnet sind, sowie ein Verfahren zur Herstellung eines solchen Prüfkörpers bekannt. Mit diesem Prüfkörper ist die Leistungsfähigkeit verschiedener optoelektronischer Analysesysteme standardisiert überprüfbar.

Des Weiteren ist aus der DE 199 32 357 A1 ein Verfahren zur Herstellung von Proben mit darauf synthetisch erzeugten Partikeln bekannt, die zur automatischen Detektion und Analyse von Schmauchpartikeln mittels Rasterelektronenmikroskopie/energiedispersiver Röntgenmikroanalyse (REM-EDX) durchführbar ist.

Zur Herstellung der Proben wird zunächst ein Maskenlayout erstellt, in dem die Anzahl der zu detektierenden bzw. zu analysierenden Strukturen, deren Durchmesser sowie deren exakte Position auf der Probe festgelegt werden. Zusätzlich werden Teststrukturen zur späteren Justage der Proben und deren Abgrenzung untereinander hinzugefügt. Anschließend wird dieses Layout entsprechend vervielfältigt und auf eine Standard-Chrom-Maske, welche üblicherweise bei photolithographischen Prozessen verwendet wird, übertragen. Für die Proben werden handelsübliche Silizium-Wafer als Substratmaterial vorgesehen, die zunächst mit einem 1 µm dicken thermischen Oxid, d. h. Siliziumdioxid, versehen und dann mit Photolack beschichtet werden.

Im nachfolgenden Photolithographieprozess werden die definierten Strukturen mittels der Standard-Chrom-Maske auf die Wafer übertragen, das Oxid im Bereich der Strukturen entfernt und die Wafer mittels eines PVD-Verfahrens mit einer 0,7 µm dicken Blei-Antimon-Schicht versehen. Anschließend wird das noch verbliebene, sich unter der aufgebrachten Blei-Antimon-Schicht befindliche Siliziumdioxid mittels eines so genannten "Lift-off-Prozesses" nasschemisch entfernt.

Durch Entfernen des Siliziumdioxids wird auch die darüber liegende Blei-Antimon-Schicht mit abgelöst und abgetragen. Anschließend liegt als Zwischenprodukt ein Silizium-Wafer mit darauf angeordneten geometrischen Strukturen in Form von Blei-Antimon-Inseln vor, der mit einer dünnen Photolackschicht versehen wird, um die darauf angeordneten Blei-Antimon-Strukturen vor mechanischen Beschädigungen und anderen Umwelteinflüssen, wie beispielsweise Feuchtigkeit, zu schützen. Dem Photolack sind vor dem Auftragen geringe Mengen eines feinen Pulvers aus Umweltteilchen, wie Eisen, Kupfer und Blei, zugegeben, um die Proben einer realistischen Messaufgabe anzupassen.

Daran anschließend werden die Proben durch Zersägen der Wafer vereinzelt und mittels geeignetem Klebematerial, wie Leit-C oder doppelseitiger leitfähiger Klebefolie, auf Standard-REM-Probenhalter präpariert.

Nachteilig dabei ist jedoch, dass die von einem Rastelektronenmikroskop auf die Proben in Form eines Elektronenstrahls auftreffenden Elektronen über den Silizium-Wafer in nur derart geringem Umfang ableitbar sind, dass mit zunehmender Untersuchungsdauer die Proben elektrisch aufgeladen werden und ein Kontrast des Abbildes der Probenoberfläche auf dem Monitorschirm des Elektronenmikroskops derart stark beeinträchtigt ist, dass eine Partikelanalyse in nur stark eingeschränktem Umfang durchführbar ist.

### Vorteile der Erfindung

Mit dem erfindungsgemäßen Prüfkörper für Elektronenmikroskope steht ein so genannter Kalibrierstandard für Elektronenmikroskope zur Partikelanalytik zur Verfügung, mittels welchem Fähigkeiten und Grenzen von Elektronenmikroskopen im Rahmen der Partikelanalytik aufgezeigt werden können und mit dem eine Optimierung der Hard- und Software von mit Elektronenmikroskopen ausgeführten Analysesystemen durchführbar ist.

Dies wird dadurch erreicht, dass der erfindungsgemäße Prüfkörper für Elektronenmikroskope, der mit mehreren in unterschiedlicher Form und/oder Größe und in einer dauerbeständigen vorgebbaren Belegung auf einem Trägermaterial angeordnete geometrische und elektrisch leitfähige Strukturen aufweist, mit einem elektrischen leitenden Trägermaterial ausgeführt ist, so dass eine Aufladung des Prüfkörpers auf einfache Art und Weise vermieden wird und ein Kontrast des Abbildes der Probenkörperoberfläche am Monitor eines Elektronenmikroskops durch eine unerwünschte Aufladung des Prüfkörpers nicht beeinträchtigt wird. Die Aufladung wird dadurch vermieden, dass die auftreffenden Elektronen des Elektronenmikroskops über das leitfähige Trägermaterial auf einfache Art und Weise abführbar sind.

Des Weiteren bietet der erfindungsgemäße Prüfkörper die Möglichkeit, Partikelanalysen, die beispielsweise von verschiedenen Bedienpersonen an unterschiedlichen Gerätetypen von Elektronenmikroskopen mit variierenden Geräteeinstellungen, mit unterschiedlicher Auswertesoftware sowie unterschiedlich präparierten Proben durchgeführt werden, auf einfache Art und Weise miteinander zu vergleichen.

Der erfindungsgemäße Prüfkörper stellt einen Kalibrierstandard für Elektronenmikroskope zur Partikelanalytik und eine Basis für ein einheitliches, überbetriebliches System dar, wodurch ein entscheidender Beitrag zur Verbesserung der Qualitätssicherung in der Partikelanalytik mit Hilfe der Elektronenmikroskopie vorliegt.

Des Weiteren besteht mit dem erfindungsgemäßen Verfahren zur Herstellung eines Prüfkörpers für Elektronenmikroskope, der ein elektrisch leitendes Trägermaterial und mehrere darauf in einer vordefinierten Belegung angeordnete geometrische und elektrisch leitende Strukturen aufweist, die Möglichkeit, geometrische Strukturen auf dem Trägermaterial mit Schichtdicken zu erzeugen, welche ein Durchdringen der Strukturen von den auf dem Prüfkörper auftreffenden Elektronen vermeiden und somit ein eindeutiges und verifizierbares Prüfergebnis gewährleisten, wobei die Verifikation des Prüfergebnisses auch durch die exakt herstellbare vordefinierte Belegung des Trägermaterials mit den geometrischen Strukturen in einer definierten Lage sowie mit einer definierten Größe der Strukturen möglich ist.

Diese Vorteile werden dadurch erreicht, dass die Strukturen mittels Mikrogalvanoformung auf dem Trägermaterial aufgebracht werden und die vordefinierte Belegung des Trägermaterials mit den Strukturen mittels Photolithographie auf einfache Art und Weise in der geforderten Präzision standardisiert umsetzbar ist.

Das bedeutet, dass mit dem erfindungsgemäßen Verfahren in vorteilhafter Weise reproduzierbare Prüfkörper mit beliebigen geometrischen Strukturen mit einer vorgegebenen Belegung auf einfache Art und Weise und kostengünstig erzeugbar sind. Insbesondere können mit dem Verfahren nach der Erfindung dauerbeständige Prüfkörper mit einer hohen Präzision gefertigt werden, die beliebig oft mit gleicher Güte reproduzierbar sind. Damit kann in vorteilhafter Weise auf Dauer ein standardisierter Abgleich von eingesetzten Bildanalysesystemen für Elektronenmikroskope zur Partikelanalyse realitätsnah erfolgen.

Die Realitätsnähe ergibt sich insbesondere aus der Tatsache, dass die vorgegebene Belegung des Prüfkörpers mit den geometrischen Strukturen und auch die Form der Strukturen der Belegung von realen Filtern und der Form von realen Schmutzpartikeln nachbildbar bzw. simulierbar sind.

Bei einer vorteilhaften Variante des erfindungsgemäßen Verfahrens, bei dem jeweils mehrere Photolithographieherstellungsschritte und Mikrogalvanoformungsarbeitsschritt in entsprechend wechselnder Abfolge durchgeführt werden, lassen sich auf dem elektrisch leitenden Trägermaterial des Prüfkörpers vorzugsweise mehrere galvanisch abscheidbare Materialien als Kombination auf dem Trägermaterial abscheiden, die wiederum alternativ oder in Kombination nebeneinander, übereinander und/oder zueinander überlappend angeordnet sind und zudem mit einer zweidimensionalen oder einer dreidimensionalen Oberfläche ausgeführt sind.

### Zeichnung

Mehrere Ausführungsbeispiele der Erfindung sind in der Zeichnung dargestellt und werden in der nachfolgenden Beschreibung näher erläutert. Es zeigt
Figur 1 mehrere erfindungsgemäße Prüfkörper für Elektronenmikroskope vor dem Vereinzeln;
Figur 2 einen in Figur 1 näher gekennzeichneten Bereich X in vergrößerter Einzeldarstellung;
Figur 3 einen der in Figur 2 näher gekennzeichneten Bereiche Y1 bis Y4 in vergrößerter Einzeldarstellung;
Figur 4 einen stark schematisiert dargestellten Fertigungsablauf eines erfindungsgemäß ausgeführten Prüfkörpers;
Figur 5 eine Darstellung eines stark schematisierten Fertigungsablaufes eines erfindungsgemäß ausgeführten Prüfkörpers, der sich überlappende und aus unterschiedlichen Materialien gebildete geometrische Strukturen aufweist; und
Figur 6 einen stark schematisierten Fertigungsablauf eines erfindungsgemäß ausgeführten Prüfkörpers, der mit einem zweilagigen Trägermaterial ausgebildet ist, wobei der Fertigungsablauf den in Figur 4 und Figur 5 dargestellten Fertigungsabläufen jeweils vorgeschaltet ist.

### Beschreibung der Ausführungsbeispiele

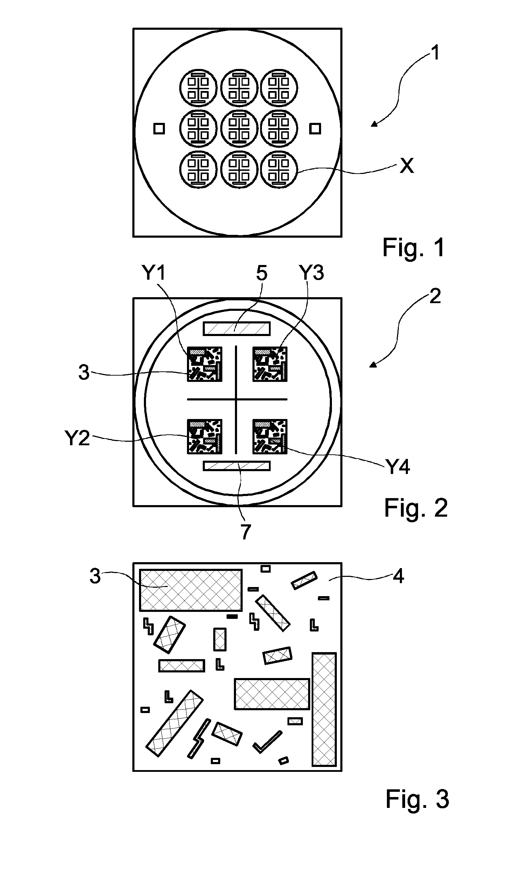

Figur 1 zeigt einen Wafer 1 der vorliegend mit mehreren Bereichen X ausgeführt ist, wovon einer in Fig. 2 in vergrößerter Einzeldarstellung gezeigt ist. Des Weiteren ist in Figur 2 ein Bereich Y näher gekennzeichnet, der wiederum in Figur 3 in vergrößerter Einzeldarstellung graphisch wiedergegeben ist.

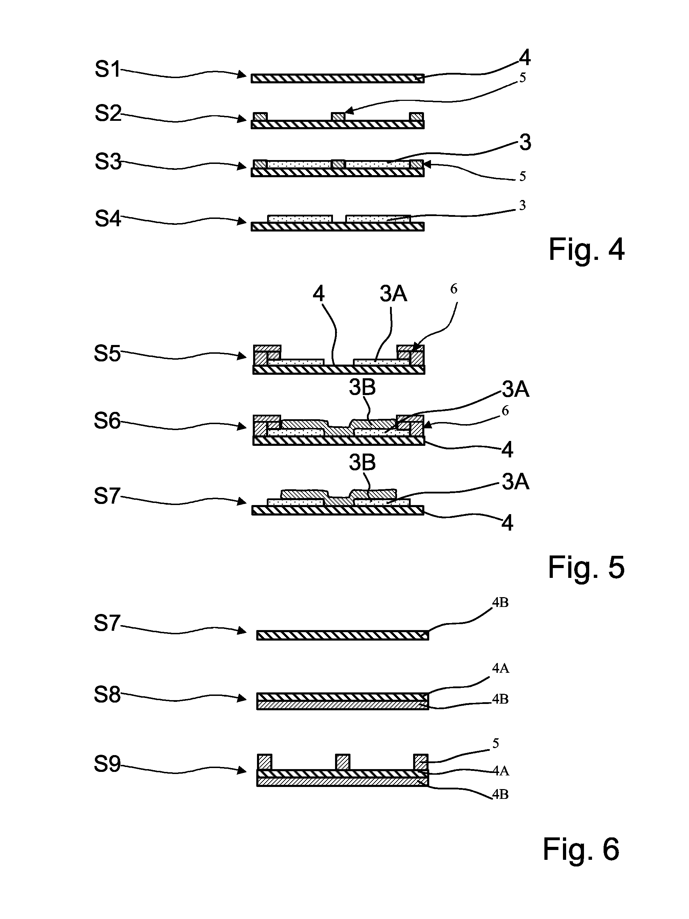

Der in Figur 1 dargestellte Wafer 1 besteht aus neun verschiedenen Prüfkörpern 2 für Elektronenmikroskope, welche im Anschluss an die in Figur 4 bis Figur 6 dargestellten Fertigungsabläufe durch ein aus der Halbleitertechnologie bekanntes Vereinzelungsverfahren, wie Sägen oder dergleichen, voneinander separiert werden.

Der in Figur 2 näher dargestellte Prüfkörper 2 weist vier wenigstens annähernd quadratisch ausgeführte Bereiche Y1 bis Y4 auf, die in der in Figur 3 näher dargestellten Art und Weise mit verschiedenen geometrischen und elektrisch leitfähigen Strukturen 3, die in unterschiedlicher Form und Lage zueinander auf einem Trägermaterial 4 des Prüfkörpers 2 bzw. dem Wafer 1 angeordnet sind, ausgebildet sind. Das Trägermaterial 4 ist ebenfalls elektrisch leitend ausgeführt und ist mit den geometrischen Strukturen 3 fest verbunden. Des Weiteren ist der Prüfkörper 2 mit einem Beschriftungsfeld 5, einer Trennlinie 6 und einem weiteren Feld 7, auf welchem eine Maskenbeschriftung auftragen wird, ausgeführt.

Der Prüfkörper 2 stellt einen Kalibrierstandard für Elektronenmikroskope zur Partikelanalytik dar, der vorliegend metallisch ausgeführte geometrische Strukturen 3 in Rechteckform, L-Form und Z-Form aufweist, die auf dem leitfähigen und ausdehnungsarmen Trägermaterial 4 mittels Mikrogalvanoformung aufgebracht sind. Die unterschiedlichen geometrischen Formen der geometrischen Strukturen 3 stellen jeweils eine Schematisierung von in der Praxis zu vermessenden Schmutzpartikeln dar, anhand derer eine Sauberkeitsanalyse bzw. eine Bewertung der Effizienz von Reinigungsprozessen durchgeführt wird.

In Abhängigkeit des jeweils vorliegenden Anwendungsfalls können die in Figur 3 näher dargestellten geometrischen Strukturen 3 nebeneinander, übereinander oder überlappend angeordnet sein, um die realen Gegebenheiten, die durch einen mit willkürlicher Belegung an Schmutzpartikeln vorliegenden Filterobjekts charakterisiert ist, möglichst exakt abbilden zu können und die Leistungsfähigkeit bekannter Analysesysteme in Abhängigkeit unterschiedlicher Vorgaben bestimmen zu können.

Die in Figur 2 dargestellten Bereiche Y1 bis Y4 sind vorliegend jeweils mit unterschiedlich geformten Strukturen 3 mit abweichenden Orientierungen sowie mit verschiedenen Partikellängen ausgeführt, um mit einem Elektronenmikroskop nacheinander mehrere Messungen ohne zeitaufwändige Wechsel des zu vermessenden Objekts durchführen zu können.

Des Weiteren sind die geometrischen Strukturen 3 der in Figur 2 dargestellten Bereiche Y1 bis Y4 jeweils aus unterschiedlichen Materialien gebildet, wobei der erste Bereich Y1 Strukturen aus Nickel, der zweite Bereich Y2 Strukturen aus Kupfer, der dritte Bereich Y3 Strukturen aus Gold und der vierte Bereich Y4 eine Kombination aus geometrischen Strukturen, die aus Gold, Nickel oder Kupfer gebildet sind, aufweist.

Für die Belegung des Trägermaterials 4 bzw. der Messfläche des Prüfkörpers 2 sind verschiedene Freiheitsgrade vorgesehen, wobei die Belegung des Trägermaterials 4 insbesondere in Abhängigkeit der Form der geometrischen Strukturen 3 ausgebildet ist. Unter der Form der geometrischen Strukturen 3 sind bei einem Rechteck das Seitenverhältnis sowie die Abmessungen insgesamt zu verstehen, wobei bei der Auswertung der Belegung des Prüfkörpers 2 mit einem mit einem Elektronenmikroskop ausgeführten Analysesystem die Diagonale einer als Rechteck ausgebildeten geometrischen Struktur 3 von besonderem Interesse ist.

Selbstverständlich liegt es im Ermessen des Fachmannes die geometrischen Strukturen als andere zweidimensionale geometrische Formen, wie beispielsweise Dreiecke, Kreise, Ellipsen oder dergleichen auszuführen. Ein wesentliches Kriterium bei der Gestaltung der geometrischen Strukturen 3 stellt die Gestaltung des Umrisses jeder einzelnen geometrischen Struktur 3 dar, der für ein einwandfreies Messergebnis klar konturiert ausgebildet sein sollte.

Der in Figur 3 dargestellte Bereich Y zeigt die verschiedenen Größen, Formen und Orientierungen der einzelnen geometrischen Strukturen 3. Die geometrischen Strukturen 3 sind als Rechtecke mit unterschiedlichen Seitenverhältnissen und mit Längen zwischen 2 µm bis 3000 µm ausgebildet.

Des Weiteren weisen die geometrischen Strukturen 3 eine vorgegebene bzw. definierte Orientierung auf dem Trägermaterial 4 auf, die einen weiteren Freiheitsgrad bzw. einen weiteren Parameter der Belegung des Trägermaterials 4 darstellt. Die geometrischen Strukturen 3 sind in der Regel nicht mit der gleichen Orientierung auf dem Trägermaterial 4 angeordnet. Dies ist darin begründet, dass die auf realen Filtern angeordneten Schmutzpartikel ebenfalls verschiedene Orientierungen aufweisen und der Prüfkörper 2 somit so realitätsnah wie möglich ausgestaltet ist. Damit kann die Wirksamkeit bzw. Leistungsfähigkeit der Analysesysteme noch besser überprüft werden.

Einen weiteren Freiheitsgrad der Belegung des Trägermaterials 4 stellt die Vorgabe einer absoluten Position jeder einzelnen geometrischen Struktur 3 auf dem Trägermaterial 4 dar. Die Absolutkoordinaten einer geometrischen Struktur 3 auf dem Trägermaterial 4 sind insbesondere dann von besonderem Interesse, wenn der Prüfkörper 2 bzw. die Messfläche des Prüfkörpers in mehrere Mess- bzw. Prüffelder unterteilt wird und mehrere geometrische Strukturen 3 an der Grenze zwischen zwei, drei oder vier Messfeldern angeordnet sind. Idealerweise wird die Gesamtheit einer solchen Struktur in einem Messfeld vollständig und in den anderen Messfeldern nicht erfasst.

Liefert das Analysesystem nach der Erfassung der geometrischen Strukturen 3 in seiner Auswertung eine von der tatsächlichen Anzahl der geometrischen Strukturen abweichende Anzahl, so kann die Abweichung darin begründet sein, dass das Analysesystem anstatt einer geometrischen Struktur 3 mehrere oder gar keine geometrische Strukturen 3 erkennt und klassifiziert.

Weiter ist die Belegung des Trägermaterials 4 durch eine Anzahl an geometrischen Strukturen 3 einer bestimmten Größenklasse sowie in Abhängigkeit eines Abstandes zwischen jeweils zwei benachbarten Strukturen vorgegeben. Die geometrischen Strukturen 3 werden vorzugsweise sehr nahe nebeneinander platziert, um überprüfen zu können, wie das Analysesystem diese auflöst. Dabei ist von besonderem Interesse, ob das Analysesystem aus den vielen kleinen geometrischen Strukturen eine einzige geometrische Struktur bildet oder ob es alle einzeln auflösen und einzeln klassifizieren kann.

Eine besondere Beständigkeit des Prüfkörpers 2 wird dadurch erreicht, dass das Trägermaterial 4 und die geometrischen Strukturen jeweils mit wenigstens annähernd gleichen thermischen Ausdehnungskoeffizienten ausgeführt sind, da temperaturbedingte Längenänderungen des Trägermaterials 4 und der geometrischen Strukturen 3 keine allzu großen Abweichungen voneinander aufweisen und die Gefahr einer Ablösung der geometrischen Strukturen 3 von dem Trägermaterial 4 wesentlich verringert wird.

Fig. 4 zeigt den Prüfkörper 2 jeweils in einer schematisierten Querschnittansicht während verschiedener Produktionsstufen S1 bis S4, wobei unter Produktionsstufe S4 ein erfindungsgemäß ausgeführter Probenkörper 1 in seiner endgültigen Form dargestellt ist. In Produktionsstufe S1 liegt zunächst ein aus einer Titanplatte bestehendes Trägermaterial 4 vor, das für den weiteren Prozess entsprechend vorbehandelt ist.

Anschließend wird auf das Trägermaterial 4 bzw. auf die Titanplatte Photoresist 5 in flüssiger Form mit Hilfe eines Spincoaters oder in Form einer Folie mit Hilfe eines Laminators aufgebracht. Daran anschließend wird der Photoresist 5 durch eine auf das Trägermaterial 4 angepasste Maske hindurch, die vorzugsweise eine Glasmaske ist, belichtet. Die nicht dargestellte Maske enthält die vordefinierte Belegung des Trägermaterials 4 mit den geometrischen Strukturen 3 in einer positiven oder negativen Darstellung, wobei letztgenannte Alternativen in Abhängigkeit des jeweils verwendeten Photoresisttyps stehen, da entweder die belichteten oder die nicht belichteten Bereiche des Photoresists 5 durch Entwickeln von dem Trägermaterial 4 entfernt werden.

Die in der zweiten Produktionsstufe S2 von Figur 4 dargestellten und von dem Photoresist 5 freigelegten Bereiche des Trägermaterials 4 werden durch ein galvanisches Abscheidungsverfahren mit dem elektrisch leitenden Material der geometrischen Strukturen 3 ausgefüllt, wobei die Materialdicke der geometrischen Strukturen 3 zwischen einigen Hundert Nanometern bis hin zu einigen Hundert Mikrometern variierbar ist. Die Höhe der geometrischen Strukturen 3 sollte jedoch die Schichtdicke des zuvor aufgetragenen Photoresists 5 nicht übersteigen, wobei dieser Fertigungszustand des Prüfkörpers in Figur 4 in der dritten Produktionsstufe S3 näher gezeigt ist.

Anschließend wird der sich noch auf dem Trägermaterial 4 befindliche Rest des Photoresists 5 vom Trägermaterial 4 gestrippt, so dass ein in der vierten Produktionsstufe S4 dargestellter und vorliegend aus Titan bestehendem Trägermaterial 4 und aus Nickel bestehenden geometrischen Strukturen gebildeter Prüfkörper 2 ohne Photoresist vorliegt.

In Figur 5 sind drei weitere Produktionsstufen S5 bis S7 dargestellt, welche den in Figur 4 dargestellten Produktionsstufen S1 bis S4 nachgeschaltet sind. Dabei wird der in Produktionsstufe S4 dargestellte Prüfkörper 2 erneut ganzflächig mit einer weiteren Photoresistschicht 6 versehen und durch eine weitere vordefinierte und nicht näher dargestellte Maske hindurch derart belichtet und daran anschließend entwickelt, dass das Trägermaterial 4 sowie die abgeschiedenen geometrischen Strukturen 3 in dem in der fünften Produktionsstufe S5 dargestellten Bereichen mit der weiteren Photoresistschicht 6 ausgeführt ist.

Anschließend wird auf den photoresistfreien Bereichen des Trägermaterials 4 und der geometrischen Strukturen 3 galvanisch Gold abgeschieden, so dass ein in Figur 5 in der sechsten Produktionsstufe S6 dargestellter Prüfkörper 2 vorliegt, der aus sich überlappenden geometrischen Strukturen 3A und 3B gebildet ist, die aus Nickel und aus Gold bestehen.

Anschließend wird die in den Produktionsstufen S5 und S6 vorliegende weitere Photoresistschicht 6 von dem Trägermaterial 4 und den aus Nickel und Gold gebildeten geometrischen Strukturen 3A und 3B entfernt bzw. von diesen gestrippt, so dass der in der siebten Produktionsstufe S7 dargestellte Prüfkörper 2 vorliegt, der eine zweite mögliche Ausgestaltung eines erfindungsgemäßen Prüfkörpers 2 darstellt.

In Figur 6 sind drei weitere Produktionsstufen S8 bis S10 dargestellt, welche den in Figur 4 und Figur 5 dargestellten Produktionsstufen S1 bis S4 bzw. S5 bis S7 zeitlich vorgelagert sind und bei der Herstellung einer dritten Ausführungsform eines Prüfkörpers durchlaufen werden. In der zehnten Produktionsstufe S10 liegt generell ein in Figur 4 in der vierten Produktionsstufe S2 dargestelltes vorbereitetes Trägermaterial 4 vor, das im Unterschied zu Figur 4 zweischichtig ausgeführt ist und mit einer entsprechend strukturierten Photoresistschicht 5 ausgebildet ist. Dabei ist die Photoresistschicht 5 auf einer elektrisch leitend ausgeführten ersten Trägermaterialschicht 4A aufgebracht. Die Trägermaterialschicht 4A ist auf einer zweiten Trägermaterialschicht 4B aufgebracht, die entweder elektrisch leitend oder nicht leitend ausgeführt ist, wobei die erste Trägermaterialschicht 4A vorzugsweise aus einer ausdehnungsarmen Eisen-Nickel- oder NiCo-Legierung, aus Titan, Chrom, Palladium etc. gebildet sein kann, während die zweite Trägerschicht 4B vorzugsweise aus Keramik, Glas oder Silizium gebildet ist. Falls Materialien wie Keramik, Glas oder Silizium verwendet werden, ist es möglich, durch Sputterprozesse wie PVD, CVD eine leitende Schicht aufzubringen. Danach können andere Metalle darauf abgeschieden werden.

Bei einer weiteren vorteilhaften und nicht näher dargestellten Ausführungsform des Prüfkörpers sind die geometrischen Strukturen wenigstens bereichsweise durch eine geeignete wechselweise Aneinanderreihung mehrerer Photolithographie- und Mikrogalvanoformungsfertigungsschritte mit einer dreidimensionalen Oberfläche ausgeführt, um eine zusätzliche Information der Funktionsfähigkeit des jeweils verwendeten Analysesystems in Richtung der dritten Dimension, d. h. der Höhe von Partikeln, zu erhalten und die Funktionsweise der Analysesysteme in dieser Dimension überprüfen zu können.

Anhand dieses gesteigerten Informationsgehaltes, der sich nunmehr aus der chemischen Zusammensetzung eines zu analysierenden Körpers sowie den Formfaktoren des Körpers in allen drei Dimensionen zusammensetzt, ist nunmehr ein Rückschluss möglich, ob es sich um einen die Funktionsweise des betreffende Produktes schädigenden Partikel handelt oder nicht.

Dies ist beispielsweise dann von Interesse, wenn ein mittels des Analyseverfahrens entdeckter bzw. verifizierter metallischer Partikel vorliegt, der nach einem durchgeführten Reinigungsverfahren z. B. noch an einem gesäuberten Injektor eines Benzin- oder Dieseleinspritzsystems vorhanden war. Wird von dem Analysesystem jedoch eine Faser oder ein Kunststoffpartikel erkannt, der erwartungsgemäß keine Schädigung während des Betriebes eines Injektors hervorruft, können aufwendige und kostenintensive Maßnahmen zur Vermeidung der Schmutzquelle unterbleiben.

Die vorbeschriebenen und generell aus jedem auf einem elektrisch leitfähigen Trägermaterial galvanisch abscheidbaren Material herstellbaren geometrischen und leitfähig ausgeführten Strukturen 3 können beispielsweise aus Zinn, Chrom, Silber, Aluminium, Kobalt, Cadmium, Platin oder dergleichen sowie aus einer Legierung der vorgenannten Elemente gebildet sein, wobei zur Abdeckung eines breiten Kontrast- und Helligkeitsbereiches auch Elemente mit geringen atomaren Massen auf dem Trägermaterial des Prüfkörpers als geometrische Strukturen vorgesehen sein können.

Die Schichtdicke der geometrischen Strukturen sollte im Allgemeinen derart ausgeführt sein, dass ein eventuell von dem Trägermaterial ausgehendes Hintergrundsignal im Bereich der geometrischen Strukturen von diesen unterdrückt bzw. vermieden wird, wobei diese Vorgabe erfahrungsgemäß mit Schichtdicken von größer gleich 1 µm erfüllbar ist.

Mit dem erfindungsgemäßen Prüfkörper steht ein so genannter Kalibrierstandard für Elektronenmikroskope bzw. für Rasterelektronenmikroskope (REM-EDX) zur Verfügung, mit dem eine standardisierte Möglichkeit von Abgleich- und Optimierungsfunktionen, wie Kontrast und Helligkeit sowie eine Vielzahl von zu bestimmenden Größen, z. B. Länge, Fläche etc., durchführbar ist, der als Basis für ein einheitliches, überbetriebliches System zur Qualitätssicherung in der Partikelanalytik mit Hilfe der Elektronenmikroskopie eingesetzt werden kann.

## Patentansprüche

1. Prüfkörper (2) für Elektronenmikroskope mit mehreren in unterschiedlicher Form und/oder Größe und in einer dauerbeständigen vorgebbaren Belegung auf einem Trägermaterial (4; 4A) angeordneten geometrischen und elektrisch leitfähigen Strukturen (3; 3A, 3B), **dadurch gekennzeichnet, dass** das Trägermaterial (4, 4A) elektrisch leitend ist.

2. Prüfkörper nach Anspruch 1, **dadurch gekennzeichnet, dass** die geometrischen Strukturen (3; 3A, 3B) mit einer im Wesentlichen zweidimensionalen Oberfläche ausgeführt sind.

3. Prüfkörper nach Anspruch 1, **dadurch gekennzeichnet, dass** die geometrischen Strukturen mit einer dreidimensionalen Oberfläche ausgeführt sind.

4. Prüfkörper nach einem der Ansprüche 1 bis 3, **dadurch gekennzeichnet, dass** das Trägermaterial (4; 4A, 4B) und die geometrischen Strukturen (3; 3A, 3B) jeweils mit wenigstens annähernd gleichen thermischen Ausdehnungskoeffizienten ausgeführt sind.

5. Prüfkörper nach einem der Ansprüche 1 bis 4, **dadurch gekennzeichnet, dass** das Trägermaterial (4A, 4B) wenigstens zweischichtig ausgeführt ist.

6. Prüfkörper nach einem der Ansprüche 1 bis 5, **dadurch gekennzeichnet, dass** die Belegung des Trägermaterials (4; 4A, 4B) in Abhängigkeit der Form der Strukturen (3; 3A, 3B) vorgesehen ist.

7. Prüfkörper nach einem der Ansprüche 1 bis 6, **dadurch gekennzeichnet, dass** die Belegung des Trägermaterials (4; 4A, 4B) in Abhängigkeit der Position der Strukturen (3; 3A, 3B) auf dem Trägermaterial (4; 4A, 4B) erfolgt.

8. Prüfkörper nach einem der Ansprüche 1 bis 7, **dadurch gekennzeichnet, dass** eine Orientierung der Strukturen (3; 3A, 3B) auf dem Trägermaterial (4; 4A, 4B) einen Freiheitsgrad der Belegung des Basiskörpers (2) darstellt.

9. Prüfkörper nach einem der Ansprüche 1 bis 8, **dadurch gekennzeichnet, dass** die Belegung des Trägermaterials (4; 4A, 4B) durch eine Anzahl an Strukturen (3; 3A, 3B) einer bestimmten Größenklasse vorgebbar ist.

10. Prüfkörper nach einem der Ansprüche 1 bis 9, **dadurch gekennzeichnet, dass** ein Abstand zwischen zwei benachbarten Strukturen (3; 3A, 3B) einen Freiheitsgrad der Belegung des Trägermaterials (4; 4A, 4B) darstellt.

11. Prüfkörper nach einem der Ansprüche 1 bis 10, **dadurch gekennzeichnet, dass** die Strukturen (3; 3A, 3B) aus unterschiedlichen Materialien bestehen.

12. Prüfkörper nach einem der Ansprüche 1 bis 11, **dadurch gekennzeichnet, dass** die Strukturen (3; 3A, 3B) jeweils eine partielle Beschichtung, vorzugsweise eine Metallbeschichtung, des Trägermaterials (4; 4A, 4B) darstellen.

13. Prüfkörper nach einem der Ansprüche 1 bis 12, **dadurch gekennzeichnet, dass** das Trägermaterial (4; 4A) aus einem ausdehnungsarmen Material, vorzugsweise aus einer FeNi-Legierung, aus einer NiCo-Legierung, aus Titan oder aus Edelstahl gebildet ist.

14. Prüfkörper nach einem der Ansprüche 1 bis 13, **dadurch gekennzeichnet, dass** die Strukturen (3; 3A, 3B) aus Ni, Zn, Cr, Cu, Fe, Au, Ag, Al, Co, Cd und/oder P oder aus einer Legierung aus diesen Materialien gebildet sind.

15. Prüfkörper nach einem der Ansprüche 1 bis 14, **dadurch gekennzeichnet, dass** die Schichtdicke der Strukturen (3; 3A, 3B) größer oder gleich 1 µm ist.

16. Verfahren zur Herstellung eines Prüfkörpers (2) für Elektronenmikroskope, der ein elektrisch leitendes Trägermaterial (4) und mehrere darauf in einer vordefinierten Belegung angeordnete, geometrische und elektrisch leitende Strukturen (3; 3A, 3B) aufweist, wobei die mit unterschiedlicher Lage und/oder Größe ausgeführten Strukturen (3; 3A, 3B) auf dem Trägermaterial (4; 4A, 4B) mittels Mikrogalvanoformung aufgebracht werden und eine vordefinierte Belegung des Trägermaterials (4; 4A, 4B) mittels Photolithographie umgesetzt wird.

17. Verfahren nach Anspruch 16, **dadurch gekennzeichnet, dass** vor dem Aufbringen der Strukturen (3; 3A, 3B) ein Photoresist (5; 6) auf das Trägermaterial (4; 4A, 4B) aufgebracht und entwickelt wird, wobei das Trägermaterial (4; 4A, 4B) nach dem Aufbringen des Photoresists (5; 6) mit der für die vordefinierte Belegung des Trägermaterials (4; 4A, 4B) erforderlichen Maske belichtet wird.

18. Verfahren nach Anspruch 17, **dadurch gekennzeichnet, dass** auf den freien Oberflächenbereichen des Trägermaterials (4; 4A, 4B) das Material der Strukturen (3; 3A, 3B) abgeschieden wird.

19. Verfahren nach Anspruch 16 oder 17, **dadurch gekennzeichnet, dass** die Höhe der Strukturen (3; 3A, 3B) maximal der Höhe des Photoresists (5; 6) auf dem Trägermaterial (4; 4A, 4B) entspricht.

20. Verfahren nach einem der Ansprüche 17 bis 19, **dadurch gekennzeichnet, dass** der Photoresist (5; 6) nach dem Aufbringen der Strukturen (3; 3A, 3B) entfernt wird.

21. Verfahren nach einem der Ansprüche 16 bis 20, **dadurch gekennzeichnet, dass** zum Erzeugen von Strukturen (3; 3A, 3B) aus unterschiedlichen Materialen und/oder Strukturen mit einer dreidimensionalen Oberfläche auf dem Trägermaterial (4; 4A, 4B) abwechselnd mehrere Lithographie- und Mikrogalvanoformungsschritte durchgeführt werden.
